Europäisches Patentamt

European Patent Office

Office européen des brevets

(11) Numéro de publication: **0 133 395**
**A1**

(12) ## DEMANDE DE BREVET EUROPEEN

(21) Numéro de dépôt: **84401521.4**

(22) Date de dépôt: **19.07.84**

(51) Int. Cl.⁴: **G 01 F 25/00, F 17 D 3/08**

(30) Priorité: **21.07.83 FR 8312060**

(43) Date de publication de la demande: **20.02.85**
**Bulletin 85/8**

(84) Etats contractants désignés: **BE DE GB IT NL**

(71) Demandeur: **SOCIETE DES TRANSPORTS PETROLIERS PAR PIPE-LINE, 7 & 9, rue des Fréres Morane, F-75738 Paris Cedex 15 (FR)**

(72) Inventeur: **Mocquart, Jacques, 19, rue Alexandre Dumas, F-94210 La Varenne St-Hilaire (FR)**
Inventeur: **Dang, Alain, 44, rue Emile Duclaux, F-92150 Suresnes (FR)**

(74) Mandataire: **Lepeudry-Gautherat, Thérèse et al, CABINET ARMENGAUD JEUNE CASANOVA et LEPEUDRY 23 boulevard de Strasbourg, F-75010 Paris (FR)**

(54) **Lanceur de sphère pour tube étalon de contrôle de compteur de volume.**

(57) L'invention concerne un lanceur de sphère constitué d'un corps possédant une ouverture de réception de la sphère et une ouverture d'introduction de la sphère à l'entrée de la boucle, et comportant un clapet coopérant avec un siège.

Selon l'invention le clapet (7) est solidaire en rotation d'un axe (14) situé à distance du clapet (7) et parallèle à son plan. Il peut ainsi se déplacer à l'intérieur du lanceur entre deux positions extrêmes, le clapet (7) étant appliqué hermétiquement contre le siège (8) dans sa première position extrême, et permettant à la sphère (37) de venir en butée sur le siège (8) dans une deuxième position extrême, le retour du clapet (7) à sa première position extrême assurant le passage en force de la sphère (37) à travers le siège (8).

Application à l'étalonnage de compteur de volume.

La présente invention concerne un lanceur de sphère destiné à être employé dans des tubes étalons de contrôle de compteurs de volume.

De tels étalons de contrôle comprennent généralement une boucle de canalisation calibrée comportant le compteur à vérifier, et dans laquelle est lancée une sphère qui est entraînée avec le fluide en circulation. Les deux extrémités de ladite boucle sont réunies par un dispositif de transfert, permettant de faire passer la sphère de la sortie à l'entrée de la boucle, ou pour l'introduire initialement dans le circuit. Certains étalons prévoient que, durant la phase de contrôle du compteur, le dispositif de transfert soit fermé hermétiquement à l'aide d'un obturateur à clapet.

On connaît déjà différents types d'étalons de contrôle.

Parmi ceux-ci, les étalons ne prévoyant pas d'obturateur à clapet dans le dispositif de transfert ne seront pas davantage évoqués, car le contrôle de l'étanchéité de ce dispositif est difficule à réaliser,contrôle qui est pourtant important pour valider l'essai du compteur à tester. Il existe par ailleurs des étalons dont le dispositif de transfert comporte deux clapets, l'un étant affecté à l'introduction de la sphère à l'entrée de la boucle, l'autre à la récupération de cette sphère à la sortie de la boucle. Ce système permet d'introduire la sphère à l'entrée de la boucle par gravité. Il existe aussi des systèmes à cage munis d'un clapet, dans lesquels la sphère est introduite à l'entrée de la boucle à l'aide de cette cage, l'obturateur à clapet se fermant simultanément.

Un autre système, décrit dans le brevet français N° 2 112 313, offre une simplification par rapport aux systèmes précédents. Ce système ne comporte qu'un seul clapet, et ne nécessite pas de cage pour la réception de la sphère à la sortie de la boucle, cette sortie étant isolée de la canalisation principale de circulation du fluide. Ce clapet est mis en mouvement par exemple au moyen d'un vérin linéaire, et assure, outre la fonction d'étanchéité, celle de transférer la sphère de la sortie à l'entrée de la boucle.

Les principaux inconvénients de ce système sont liés au mode d'actionnement linéaire du clapet. La tige de manoeuvre centrale rend malaisée l'introduction de la sphère dans le dispositif de transfert. La sphère arrivant de la sortie de la boucle de canalisation dans le dispositif de transfert tend à bloquer la remontée du clapet, aussi est-il nécessaire de prévoir un mécanisme annexe de retenue de la sphère, mécanisme indirectement commandé par le système d'actionnement du clapet, donc sujet à des aléas de fonctionnement.

Un autre inconvénient lié à la structure de fonctionnement linéaire de ce système est l'encombrement qui en résulte, puisqu'un organe se déplace nécessairement à l'extérieu du dispositif de transfert, selon une course équivalente à celle du clapet à l'intérieur. Ceci nécessite la construction d'une enveloppe spéciale de grand volume résistant à la pression, ce qui n'est pas sans incidence sur le coût d'un tel système.

Un autre inconvénient de ce système est d'avoir à appliquer une pression continue sur le clapet afin d'obtenir une bonne étanchéité.

Un autre inconvénient de ce système est que l'ensemble mécanique comprenant le clapet et sa tige de manoeuvre est rigide. Un tel ensemble entraîne des contraintes lors du montage, car il ne tolère ni défauts d'alignements, ni jeux. Aussi, l'utilisation d'un moteur électrique, par exemple, pour actionner la tige de manoeuvre du clapet, de par les fins de courses imprécises qu'il peut impliquer, n'est guère utilisable dans ce système. Quant à la fabrication du dispositif de transfert, elle doit être très précise. Toutes ces contraintes ont des conséquences sur le coût d'un tel système.

Selon l'invention, l'ensemble de ces problèmes est résolu par le fait que le lanceur de sphère pour tube étalon de contrôle de compteur de volume, destiné à transférer une sphère de l'extrémité de sortie d'une boucle de canalisation

3

à son extrémité d'entrée, constitué d'un corps possédant au moins une ouverture de réception de ladite sphère et une ouverture d'introduction de la sphère à l'entrée de ladite boucle, et comportant au moins un clapet coopérant avec un siège, est tel que ledit clapet est solidaire en rotation d'un axe situé à distance de ce clapet et parallèle à son plan, qu'il peut aussi se déplacer à l'intérieur du lanceur entre deux positions extrêmes, ledit clapet étant appliqué hermétiquement contre le siège dans sa première position extrême, et permettant à la sphère, mobile à l'intérieur du corps, de de venir en butée sur ledit siège dans une deuxième position extrême, le retour du clapet à sa première position extrême assurant le passage en force de la sphère à travers le siège.

D'autres détails et avantages de l'invention apparaîtront dans la description qui suit d'un mode de réalisation non limitatif et illustré par les dessins, qui montrent:

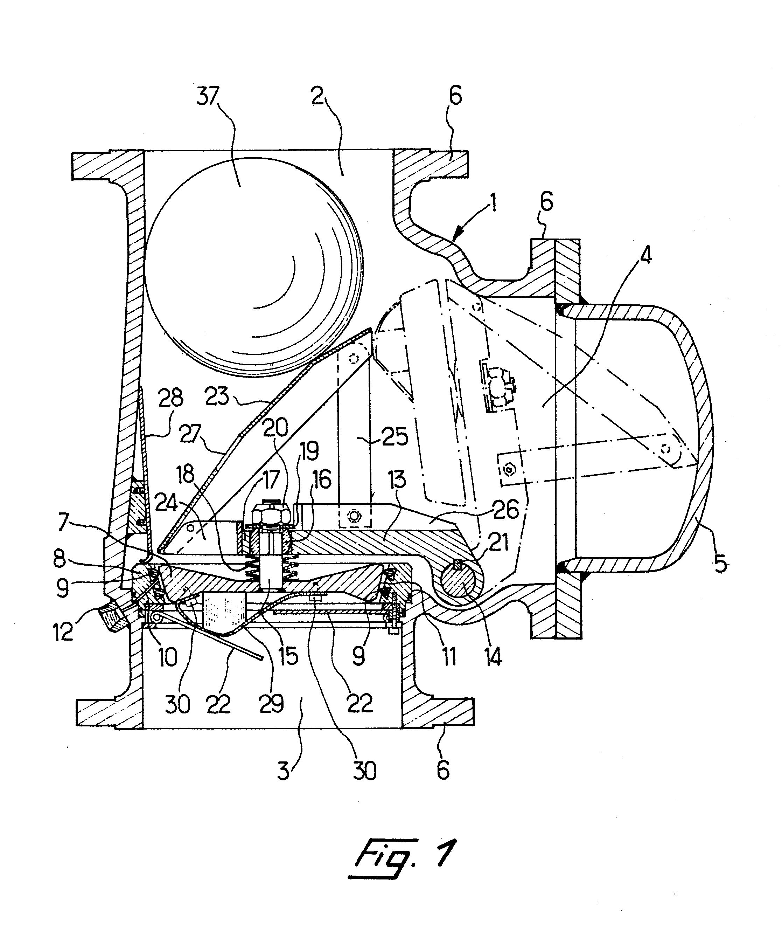

En figure 1, une coupe transversale du lanceur de sphère selon l'invention, dans la position précédant le lancement de la sphère.

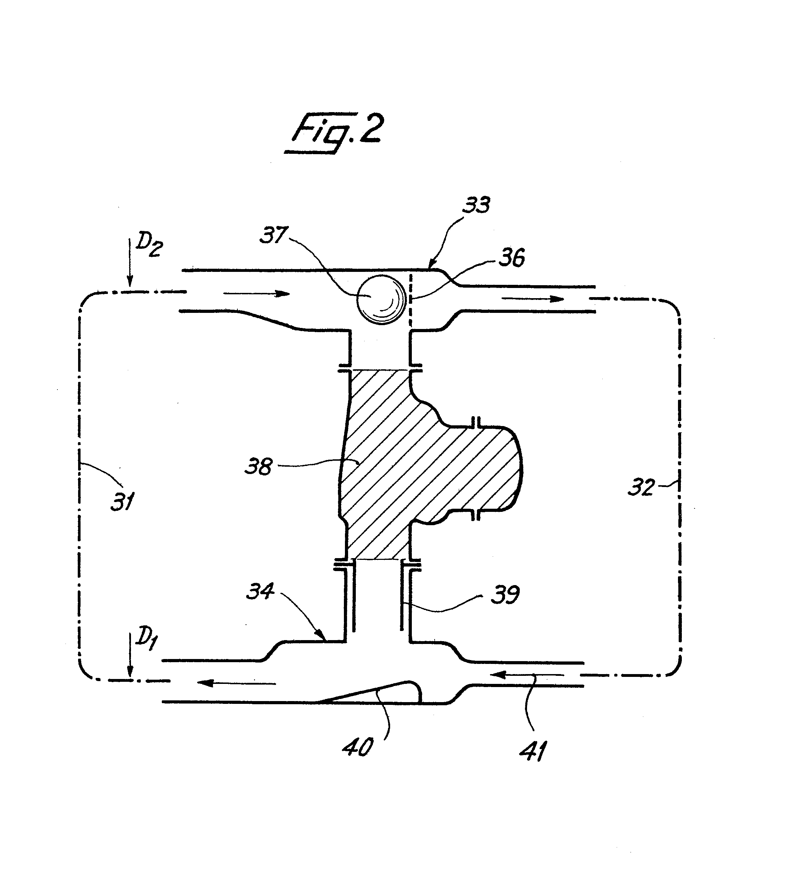

En figure 2, un schéma de boucle étalon selon l'invention, représentée verticalement.

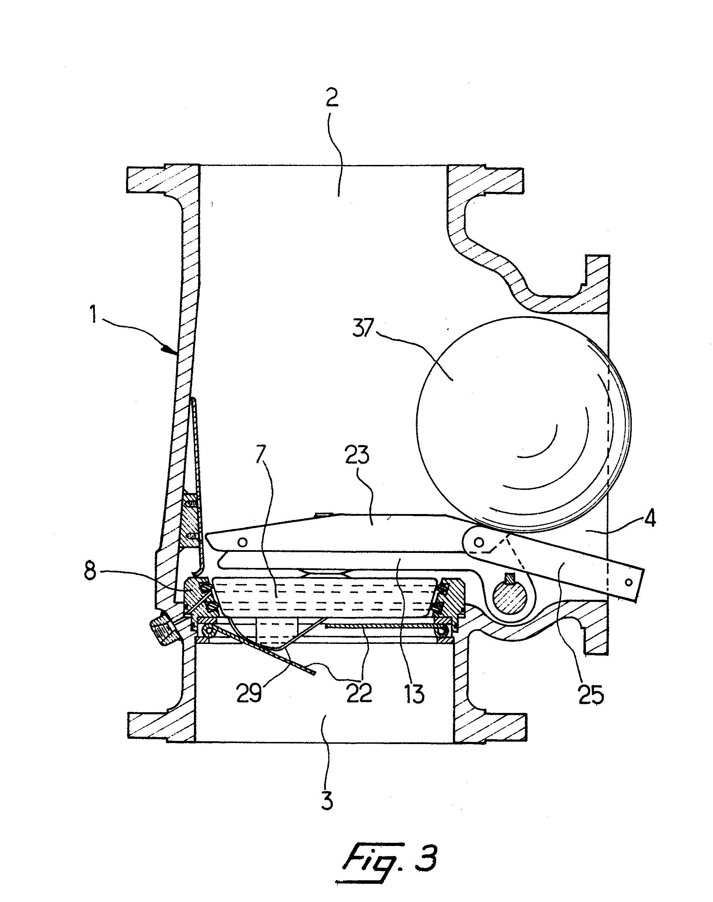

En figure 3, une coupe du lanceur, lors de l'introduction de la sphère dans la canalisation.

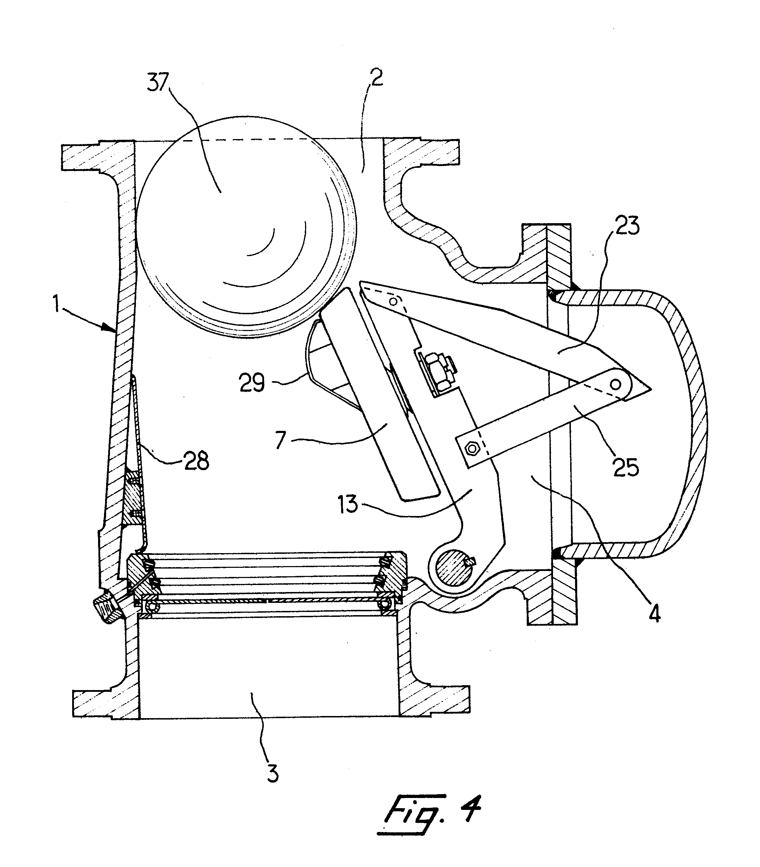

En figure 4, une coupe du lanceur, au cours du pivotement du lanceur pour laisser passer la sphère.

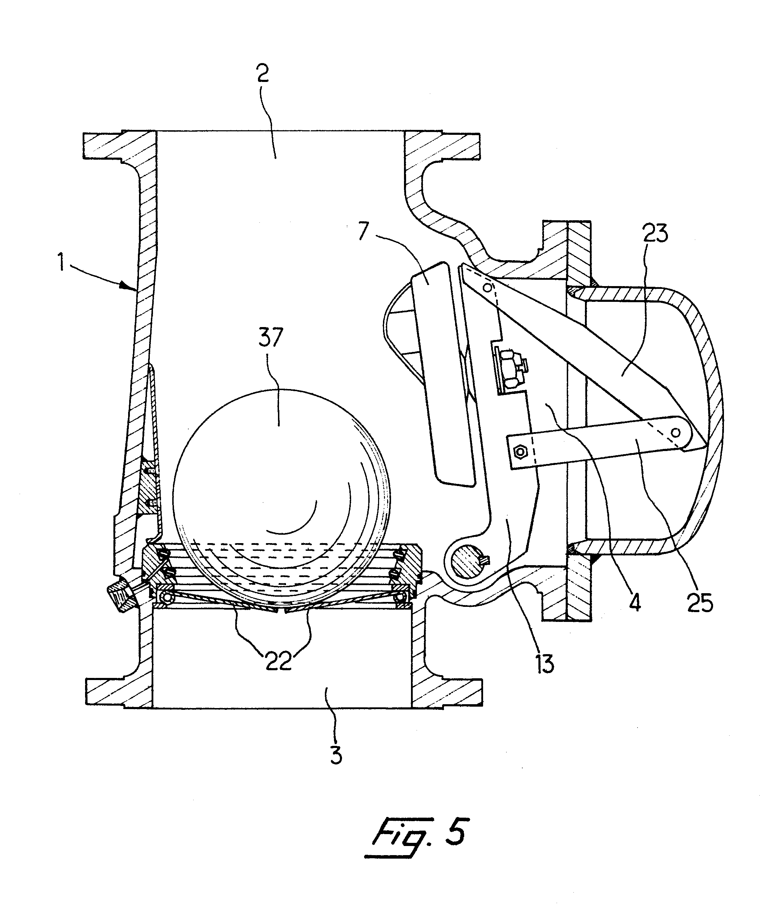

En figure 5, une coupe du lanceur, à la fin de son pivotement.

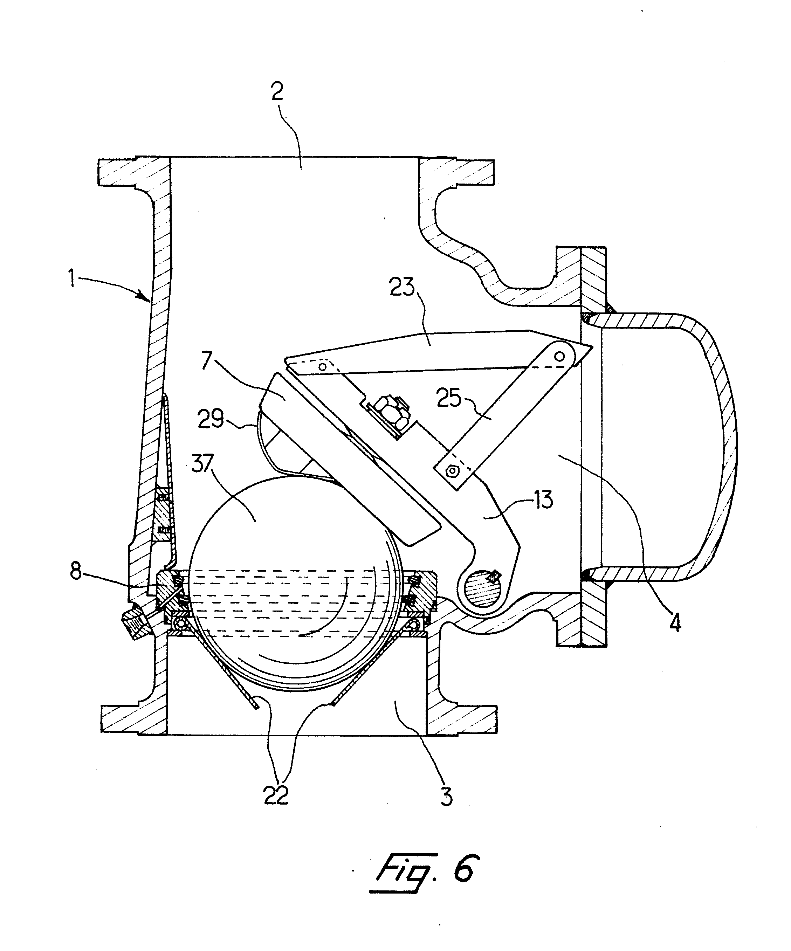

En figure 6, une coupe du lanceur, lors du lancement de la sphère.

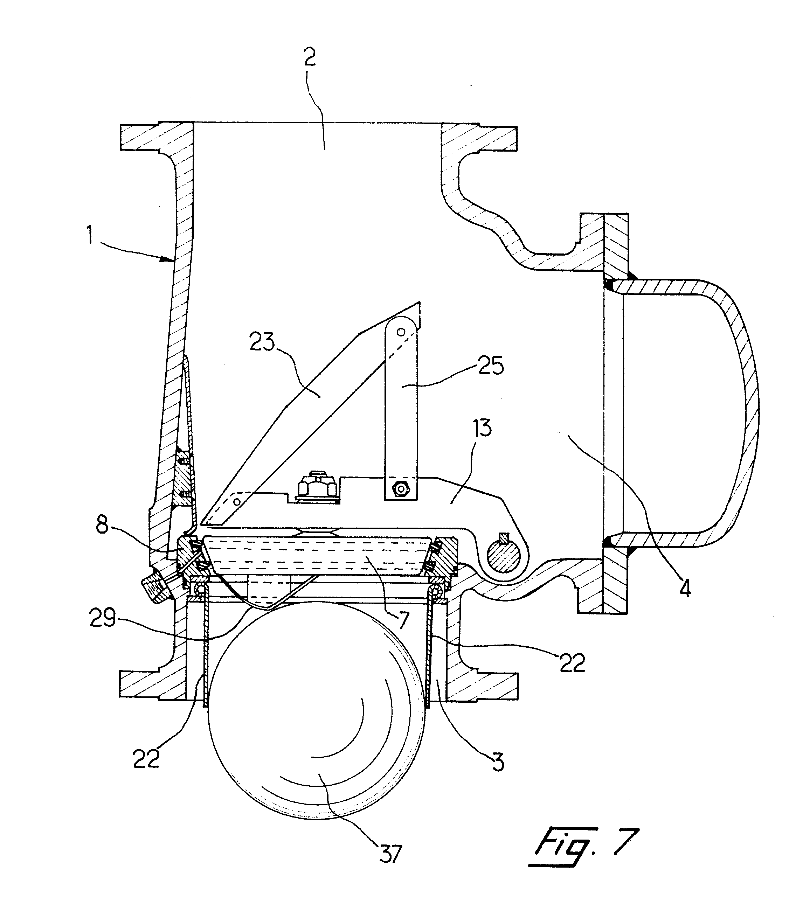

En figure 7, une coupe du lanceur, lors de la fermeture du clapet.

La figure 1 représente un lanceur de sphère conforme à l'invention, en position verticale. Il est constitué d'un corps 1 qui sera avantageusement un corps standard de clapet du commerce. C'est un corps en forme de T, qui possède trois ouvertures circulaires 2, 3 et 4. L'ouverture 2 est destinée à être reliée à l'extrémité de sortie d'une boucle de canalisation étalonnée non représentée, et l'ouverture 3 à son extrémité d'entrée.

Chacune des trois ouvertures 2, 3, 4 possède une collerette 6 de fixation avec des éléments de tuyauterie extérieurs. L'ouverture 4 est équipée d'une porte 5 à ouverture rapide, qui se ferme hermétiquement sur la collerette 6 . Le corps 1 est équipé d'un clapet interne 7, représenté ici appliqué contre un siège 8 de façon hermétique, grâce à la présence de deux joints toriques 9 encastrés dans deux gorges ménagées dans le siège. Le clapet 7 possède une forme conique qui s'applique sur une forme correspondante du siège 8. Plusieurs conduits 10, prévus dans le siège 8, relient la zone 11, comprise entre les deux joints toriques 9 et la surface du siège 8 s'appuyant sur eux, avec un embout de raccordement extérieur 12. Afin de commander le déplacement du clapet 7 depuis la position qu'il occupe en figure 1 jusqu'à celle représentée en trait mixte, celui-ci est rendu solidaire d'un levier 13, lui-même solidaire en rotation d'un axe d'entraînement 14. Le volume délimité par le corps 1 et la porte 5 est suffisant pour autoriser le déplacement du clapet. Le clapet 7 est relié au levier 13 par une tige 15 fixée par exemple par soudage au centre du clapet 7. Cette tige 15 possède un double carré rapporté 16 qui peut se déplacer en translation dans un carré femelle 17 prévu à l'une des extrémités du levier 13. De plus, le jeu prévu entre les carrés 16 et 17 permet une légère rotation du clapet 7. Le levier 13 est maintenu à distance par rapport au clapet 7 de façon élastique par un empilage de rondelles 18 type Belleville, montées sur la tige 15, entre le clapet 7 et le carré 16. Ces rondelles 18 repoussent le carré femelle 17 du levier 13 contre une rondelle de butée 19 montée sur la tige 15, et immobilisée contre le carré 16 par un écrou 20. Elles préviennent aussi une rotation du clapet 7 dans son plan. L'extrémité du levier 13, opposée à celle comportant le carré femelle 17, est coudée et perforée de façon à être montée sur l'axe d'entraînement 14. Cet axe 14 est situé dans le plan du siège 8, et est maintenu par des paliers non représentés sur le corps 1. Une clavette 21 rend solidaires en rotation l'axe 14 et le levier 13. L'axe 14, qui débouche de façon hermétique à l'extérieur du corps 1, peut être un axe de moto-réducteur électrique par exemple, la motorisation, non représentée, étant fixée sur la paroi extérieure du corps 1.

Sous le siège 8 est monté un clapet à secteurs 22 en lui-même connu. Il comporte par exemple six volets mobiles vers le bas et rappelés élastiquement vers leur position horizontale de butée. Dans cette dernière position, ils s'opposent au fluide éventuel qui remonterait par l'ouverture 3 à travers le siège 8 en lui offrant un passage minimal. Par contre, ils pivoteront lors du passage en force, par exemple de la sphère 37, vers le bas.

Plusieurs déflecteurs de guidage de la sphère sont prévus dans le lanceur selon l'invention. Un déflecteur 23 de retenue de la sphère 37 est solidaire du levier 13. Le levier 13 possède un bras 24 fixé à la base du déflecteur 23 et permettant de maintenir celui-ci. Le déflecteur 23, qui peut pivoter par rapport au bras 24, est maintenu en position relevée par un montant 25 fixé dans la partie supérieure du déflecteur 23, de façon à pouvoir pivoter. Le montant 25 est fixé à sa base sur une nervure 26 du levier 13, de façon démontable. Ainsi, le déflecteur 23 peut être rabattu sur le levier 13. Le déflecteur 23 possède avantageusement une forme convexe ainsi qu'une perforation 27 autorisant l'affleurement de l'écrou 20 à sa surface, de façon qu'il puisse être rabattu jusqu'à une position horizontale. Un déflecteur fixe 28, vissé sur la paroi intérieure du corps 1, et venant affleurer le bord intérieur du siège 8, permet de guider la sphère 37 dans sa descente vers ce siège. Un troisième déflecteur 29 est fixé sur la face inférieure du clapet 7 par des vis 30. De forme adaptée à celle de la sphère 37, il favorise la poussée de celle-ci à travers le siège 8.

La figure 2 représente une boucle étalon selon l'invention. On y voit une boucle de canalisation calibrée 31, et une boucle de canalisation 32 comportant l'appareil à tester. Ces deux boucles sont reliées l'une à l'autre en partie haute par un raccord en T 33, et en partie basse par un raccord en T 34. Le raccord en T 33 possède un séparateur 36 du côté de la boucle 32 permettant de laisser passer le fluide, tout en pouvant retenir la sphère 37. De façon connue, un détecteur de sphère D1 est disposé à l'entrée de la boucle 31, après le raccord en T 34, et un détecteur D2 est disposé à sa sortie, avant le raccord en T 33. Le lanceur 38 selon l'invention est raccordé par son entrée sous ce raccord en T 33, et par sa sortie au raccord 34 en T. Une manchette 39 est avantageusement prévue immédiatement à la sortie du lanceur 38, afin de ralentir la sphère 37 dans sa chute, ce qui permet de diminuer la longueur morte de canalisation prévue habituellement dans ce but, entre le raccord 34 en T et le détecteur de sphère D1. Au fond du raccord 34 en T est fixé un déflecteur 40 incliné vers la boucle d'étalonnage 31 et favorisant l'introduction de la sphère 37 dans cette boucle. Des flèches 41 indiquent le sens de circulation du fluide dans le circuit.

Le fonctionnement du lanceur selon l'invention va maintenant être expliqué plus en détails. L'introduction initiale de la sphère 37 dans le circuit s'effectue comme suit : on retire la porte 5 à verrouillage rapide (figure 1), et l'on rabat le déflecteur 23. Pour ce faire, on détache le montant 25 à sa base. Le déflecteur 23 peut alors être rabattu comme représenté en figure 3. Ce déflecteur ainsi que le montant 25 constituent une rampe d'accès, sur laquelle la sphère 37 peut rouler. Il suffit alors d'introduire la sphère 37 dans le corps 1 par l'ouverture 4, de relever le déflecteur 23, lequel pousse la sphère 37 vers l'ouverture 2, de rattacher le montant 25 à sa base, et enfin de remonter la porte 5 à verrouillage rapide. La sphère 37 est alors en butée sur le déflecteur 23, comme représenté en figure 1.

Il est quelquefois nécessaire de sortir la sphère 37 du circuit. Cette sortie s'effectue de façon inverse, la sphère 37 étant initialement en butée sur le déflecteur 23, et sortant du corps 1 en roulant sur la rampe constituée du déflecteur 23 et du montant 25 rabattus.

Une fois la sphère 37 introduite et disposée selon la figure 1, les rondelles 18 étant comprimées élastiquement par le levier 13, elles transmettent une force permanente au clapet 7, ce qui garantit une bonne portée de ce dernier sur son siège 8. Le système d'entraînement est simplement bloqué, et n'a pas à transmettre une force continue au levier 13, comme dans l'art antérieur. Les possiblilités de pivotement du clapet 7 par rapport au levier 13 assurent également une bonne assise du clapet 7 sur son siège 8, et permettent de fabriquer les différentes pièces mécaniques du lanceur suivant des tolérances assez larges.

Il faut maintenant "armer" le lanceur pour l'envoi de la sphère 37 dans la boucle étalon. Le pivotement du levier 13 vers le haut est alors commandé par le dispositif d'entraînement. Une position intermédiaire est représentée sur la figure 3 où la sphère 37 roule sur la surface extérieure du déflecteur 23, du clapet 7, puis du déflecteur 29, dont les formes sont adaptées à ce roulement. Après un pivotement du levier 13 suffisant pour laisser passer la sphère 37, celle-ci, guidée par le déflecteur 28, parvient en butée élastique sur le clapet à secteurs 22, comme représenté à la figure 4. On notera que le mouvement de rotation du clapet permet, à la différence de l'art antérieur, de s'affranchir aisément des risques de blocage du clapet 7 par la sphère 37. Durant le pivotement du clapet 7 vers le haut, le fluide tend à pénétrer par l'ouverture 3 dans le lanceur. Mais le clapet à secteurs 22 retient la majeure partie de cet écoulement, de sorte que la sphère 37 ne risque pas d'être entraînée vers le haut par le fluide. Dans la position selon la figure 4, le lanceur est "armé" pour lancer la sphère 37 dans la boucle étalon. Il ne reste plus qu'à commander le pivotement en sens inverse du précédent du levier 13. Une position intermédiaire est représentée à la figure 5. La sphère 37, réalisée en un matériau déformable et ayant un diamètre légèrement supérieur au diamètre de passage du siège 8 (de l'ordre de 2 % en plus), son passage à travers ce siège doit s'effectuer en force. La transmission de l'effort de poussée sur la sphère 37 est favorisée par la forme du déflecteur 29, qui s'adapte à celle de la sphère 37. A la figure 6, le clapet 7 est en butée sur le siège 8. La sphère 37 a complètement traversé le siège 8 et sort avec une certaine vitesse de l'ouverture 3 du lanceur. Selon la figure 2, la sphère 37 est alors ralentie par la manchette 39, puis elle est guidée par le déflecteur 40 vers la boucle d'étalonnage 31, où s'effectue la mesure d'étalonnage proprement dite.

Les éventuels défauts d'étanchéité entre le clapet 7 et son siège 8 se traduisent par des variations de pression dans la zone 11 (figure 1), qui sont transmises par les conduits 10 jusqu'à un embout 12, sur lequel on peut monter un pressostat qui permettra de détecter ces variations, en particulier durant la phase d'étalonnage.

A la sortie de la boucle 31, la sphère 37 parvient au raccord en T 33 où elle est stoppée par le séparateur 36, et retombe par gravité dans le lanceur 38.

L'invention trouve son application pour l'étalonnage de compteurs de volume, en particulier dans le cas où un encombrement minimal est recherché.

<u>REVENDICATIONS</u>

1 - Lanceur de sphère pour tube étalon de contrôle de compteur de volume, destiné à transférer une sphère de l'extrémité de sortie d'une boucle de canalisation à son extrémité d'entrée, constitué d'un corps (1) possédant au moins une ouverture (2) de réception de ladite sphère (37) et une ouverture (3) d'introduction de la sphère (37) à l'entrée de ladite boucle, et comportant au moins un clapet (7) coopérant avec un siège (8), lanceur caractérisé en ce que ledit clapet (7) est solidaire en rotation d'un axe (14) situé à distance du clapet (7) et parallèle à son plan, qu'il peut ainsi se déplacer à l'intérieur du lanceur entre deux positions extrêmes, ledit clapet (7) étant appliqué hermétiquement contre le siège (8) dans sa première position extrême, et permettant à la sphère (37), mobile à l'intérieur du corps (1), de venir en butée sur ledit siège (8) dans une deuxième position extrême, le retour du clapet (7) à sa première position extrême assurant le passage en force de la sphère (37) à travers le siège (8) .

2 - Lanceur de sphère selon la revendication 1, caractérisé en ce que le clapet (7) est mobile élastiquement en translation par rapport à son levier d'actionnement (13).

3 - Lanceur de sphère selon la revendication 2, caractérisé en ce que la liaison entre le clapet (7) et son levier d'actionnement (13) est un carré (16), et en ce que des rondelles ressort (18) sont interposées entre le clapet (7) et ledit levier (13).

4 - Lanceur de sphère selon l'une quelconque des revendications 1 à 3, caractérisé en ce que l'ensemble mobile (7,13) est pourvu de moyens de retenue (23) de la sphère (37) et de moyens (29) améliorant la poussée du clapet (7) sur ladite sphère (37).

5 - Lanceur de sphère selon l'une quelconque des revendications 1 à 4, caractérisé en ce que les moyens de retenue (23) de la sphère (37) sont rabattables.

6 - Boucle étalon de contrôle de compteur de volume, caractérisée en ce qu'elle comporte un lanceur de sphère (38) selon l'une des revendications 1 à 5, et en ce qu'elle est équipée, en outre, d'une manchette (39).

*Fig. 1*

*Fig.2*

*Fig. 3*

*Fig. 4*

*Fig. 5*

0133395

_Fig. 6_

Fig. 7

0133395

**Numéro de la demande**

## RAPPORT DE RECHERCHE EUROPEENNE

Office européen
des brevets

EP  84 40 1521

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-4 268 932  (D. HOGAN)<br>* Figures 1,2; colonne 4, lignes 59-68; colonne 5, lignes 1-60, revendication 1 * | 1 | G 01 F   25/00<br>F 17 D    3/08 |
| | --- | | |
| Y | US-A-3 169 263  (N. EAGLETON)<br>* Figure 2; colonne 5, lignes 55-75; colonne 6; colonne 7, lignes 1-25 * | 1 | |
| | --- | | |
| A,D | FR-A-2 112 313  (HELMERICH & PAYNE)<br>* Revendication 1 * | 1 | |
| | --- | | |
| A | FR-A-2 217 249  (M & J DEVELOPMENT CO.) | | **DOMAINES TECHNIQUES RECHERCHES (Int. Cl. 3)** |
| | --- | | |
| A | FR-A-2 317 636  (M & J DEVELOPMENT CO.) | | G 01 F<br>F 17 D |
| | --- | | |
| A | EP-A-0 028 575  (SOCIETE DES TRANSPORTS PETROLIERS PAR PIPE-LINE) | | |
| | ----- | | |

Le présent rapport de recherche a été établi pour toutes les revendications

| Lieu de la recherche | Date d'achèvement de la recherche | Examinateur |
|---|---|---|
| LA HAYE | 15-10-1984 | VAN DEN BULCKE E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03.82